**Europäisches Patentamt**

**European Patent Office**

**Office européen des brevets**

(19)

(11) Numéro de publication: **0 236 228**
**B1**

# FASCICULE DE BREVET EUROPEEN

(12)

(45) Date de publication du fascicule du brevet:
20.09.89

(51) Int. Cl.⁴: **C03B 19/10, C03C 11/00**

(21) Numéro de dépôt: **87400456.7**

(22) Date de dépôt: **02.03.87**

(54) **Perfectionnements à la production de microsphères en verre.**

(30) Priorité: **03.03.86 FR 8602921**

(43) Date de publication de la demande:
**09.09.87 Bulletin 87/37**

(45) Mention de la délivrance du brevet:
**20.09.89 Bulletin 89/38**

(84) Etats contractants désignés:
**AT BE CH DE FR GB IT LI LU NL SE**

(56) Documents cités:
**EP-A- 0 165 875**
**FR-A- 2 529 879**
**US-A- 3 838 998**
**US-A- 4 459 145**

(73) Titulaire: **SAINT-GOBAIN VITRAGE, "Les Miroirs" 18, avenue d'Alsace, F-92400 Courbevoie(FR)**

(72) Inventeur: **Garnier, Patrick, 66, boulevard Garibaldi, F-75015 Paris(FR)**
Inventeur: **Abriou, Daniel, 3, avenue des Verveines, F-93220 Gagny(FR)**
Inventeur: **Gaudiot, Jean-Jacques, Rua Gaivota, 294 8o Andar - Moema, BR-04522 Sao Paulo(BR)**

(74) Mandataire: **Le Vaguerese, Sylvain Jacques et al, SAINT-GOBAIN RECHERCHE 39, quai Lucien Lefranc, F-93304 Aubervilliers Cedex(FR)**

ACTORUM AG

## Description

L'invention est relative aux techniques de production de microsphères creuses en verre. De façon plus précise l'invention concerne les techniques dans lesquelles de fines particules de verre sont expansées par traitement thermique.

Parmi les publications les plus récentes sur ce sujet, il convient de mentionner la demande de brevet FR-A 2 566 384 qui décrit de façon très détaillée un ensemble de conditions permettant d'atteindre des résultats intéressants. En particulier cette publication précise les meilleures conditions de temperature, de temps de traitement, ... conduisant à des rendements d'expansion satisfaisants.

Sauf indication contraire dans la suite, l'enseignement de cette demande antérieure est applicable dans le cas de présente invention.

Il apparaît entre autres avantages du mode d'expansion selon la susdite technique, que l'on peut traiter des particules dont les dimensions initiales sont très petites en comparaison de celles que l'on savait traiter antérieurement. Une raison avancée à l'appui de cette constatation est liée à la brièveté du traitement dans les conditions décrites. Quoiqu'il en soit, il est apparu à cette occasion qu'il était possible de traiter des particules de verre dont une fraction granulométrique non négligeable pouvait être inférieure à 20 micromètres ou même 10 micromètres.

L'intérêt de l'utilisation au moins partielle de particules très petites est multiple. Par exemple la formation de ces particules s'effectue ordinairement par broyage de morceaux de verre. Dans cette opération, il se forme des particules de dimensions relativement variées. Même si l'on peut s'efforcer de limiter l'étendue de la dispersion des dimensions, il n'est pas possible d'éliminer complètement la formation de particules très fines. Il est donc particulièrement souhaitable que la totalité des particules provenant du broyage puisse être traitée et conduise à des microsphères. Cela permet d'améliorer le rendement global par rapport à la matière première; cela permet surtout d'éviter les opérations de tri particulièrement délicates que celles-ci soient effectuées avant ou après expansion. On évite aussi les inconvénients liés à la mise au rebut d'un sous-produit inutilisable.

Un autre exemple de l'intérêt qu'il y a de savoir traiter les particules très fines réside dans les qualités propres des produits obtenus. Le mode de traitement considéré dans notre demande antérieure, conduit en effet dans le cas de particules très fines à des microsphères de masses volumiques relativement élevées et de très faibles dimensions. Ces produits sont utiles notamment en tant que charges soumises à des pressions extérieures très élevées. A noter qu'à masse volumique constante, la résistance à la pression augmente quand la taille des sphères décroît. En outre, la finesse des microspères formées permet, lorsque celles-ci sont introduites dans un matériau polymère de moulage, d'aboutir à des états de surface lisses. Il est également intéressant de pouvoir disposer de microsphères qui, simultanément, présentent des dimensions très petites et une masse volumique faible lorsque le but poursuivi est l'allégement des matériaux dans lesquels ces microsphères sont introduites.

Il est apparu tout à fait souhaitable de pouvoir effectuer l'expansion de particules de verre qui pour une très forte proportion correspondaient à ces fractions granulométriques les plus faibles.

Plusieurs difficultés s'opposaient à ce type d'opération.

Ainsi il est difficile d'obtenir un produit de granulométrie très fine, par exemple inférieure à 20 micromètres, et dont le spectre granulométrique soit en même temps très étroit, par les moyens usuels de broyage, tels que les broyeurs à cylindres et broyeurs à boulets.

Un autre problème tient aux difficultés qu'il peut y avoir à extraire la poudre du broyeur. Lorsque les plus grosses particules tendent à disparaître, la poudre formée s'agglomère sur les parois du broyeur et des boulets.

De façon plus générale, même lorsque par un tri sur les fractions broyées on sélectionne un produit constitué de façon relativement homogène de particules très fines, on se heurte à des difficultés sérieuses de manipulation. Les poudres constituées de ces particules ont tendance à former des agrégats dont il est difficile de détacher les particules. Ces difficultés d'individualisation des particules se manifestent dans le transport de celles-ci jusqu'au lieu où s'effectue l'expansion. Elles interviennent également dans la qualité des produits obtenus, les particules traitées sous forme d'agrégats tendant à rester au contact les unes des autres, ce qui d'une part ne leur permet pas de se trouver dans les meilleures conditions pour leur expansion, et d'autre part favorise le "collage" des microsphères formées. Ce dernier inconvénient est particulièrement gênant lorsque l'on s'efforce d'obtenir des microsphères de très faibles dimensions. Il devient alors nécessaire de procéder à un tri granulométrique supplémentaire après expansion.

L'invention se propose de fournir les moyens permettant de produire des microsphères à partir de particules de très faibles dimensions. Avantageusement ces dimensions sont inférieures à 20 micromètres, pour au moins 90% en poids de ces particules, et de préférence, inférieures à 10 micromètres.

Les inventeurs ont constaté qu'il est possible dans un premier temps d'obtenir les particules de très faibles dimensions indiquées précédemment, par broyage de morceaux de verre, et dans un deuxième temps de transformer ces particules en microsphères présentant les propriétés souhaitées, en ajoutant au verre une faible quantité d'un agent de fluidification constitué par un composé organique comprenant une partie polaire et une partie non polaire. La partie polaire des agents de fluidification utilisés permet une bonne affinité pour le verre. Cette partie polaire comprend par exemple des radicaux hydroxyles ou amines. La partie non polaire favorise l'indépendance des particules traitées. Ces agents de fluidification sont en règle générale des produits connus pour leurs propriétés, tensioactives.

Sans que le mode d'action précis de ces agents soit bien connu, on peut supposer qu'il se forme à la surface des particules un film d'une finesse extrême, pratiquement monomoléculairer, qui permet de rompre les forces d'attraction des particules les unes avec les autres. Ceci expliquerait notamment que la quantité d'agents utilisée soit toujours très faible.

En proportion pondérale, l'agent de fluidification est toujours le plus faible possible. Cette proportion indépendamment de la nature exacte de l'agent choisi ne dépasse pas 0,5% en poids et, de préférence, n'est pas supérieure à 0,3%. La quantité d'agent introduite est fonction de la dimension des particules. Il est clair que pour une même masse de verre, la surface des particules à revêtir est d'autant plus importante que les particules sont plus petites. Par suite, pour les particules les plus fines, la quantité d'agent de fluidification croît tout en demeurant dans les limites indiquées ci-dessus. Il est aussi important de ne pas utiliser une quantité trop forte d'agent de fluidification. Au-delà d'un certain seuil, correspondant vraisemblablement au revêtement uniforme des particules, l'addition d'agent n'apporte plus d'avantages et peut même réduire de nouveau la fluidité de la masse.

Par ailleurs l'agent de fluidification est avantageusement à l'état liquide, ce qui facilite sa dispersion sur les particules à traiter.

Les agents typiques de fluidification utilisables selon l'invention sont par exemple des polyalcanol-amines, le monopropylène-glycol ou des composés analogues, ou des mélanges de ceux-ci.

Ces agents sont de préférence, mis en œuvre dès l'opération de broyage. Cette façon de procéder non seulement facilite une bonne répartition sur les particules en formation, mais aussi permet d'éviter les inconvénients indiqués précédement, et qui peuvent se manifester dès ce stade. En particulier on favorise l'obtention des particules très fines et ceci en forte proportion; on évite l'agglomération des particules formées sur les parois du broyeur.

L'addition d'agent de fluidification peut être effectuée en une ou plusieurs fois. Il semble préférable, de procéder à une addition en plusieurs fois au cours du broyage pour obtenir un maximum d'efficacité pour une quantité aussi faible que possible.

En dehors de l'utilisation de l'agent de fluidification, les inventeurs ont été conduits à préciser, pour le traitement des particules les plus petites, certains éléments du procédé, ou du dispositif proposés dans la demande antérieure précitée. Il s'agit notamment de tenir compte du fait que les échanges thermiques qui s'opèrent entre les particules et l'atmosphère environnante sont plus rapides avec les particules très petites. Pour cette raison, par exemple, le temps de séjour dans la flamme peut être avantageusement plus court. Le cas échéant aussi, la température de traitement peut être légèrement plus faible (tout en restant supérieure à la température de fusion du verre). Ces deux possibilités, et éventuellement leur combinaison sont très appréciables. Elles permettent de contrôler de façon encore plus précise le processus d'expansion des microsphères en écourtant la période de temps au cours de laquelle les microsphères expansées peuvent être sujettes à un collapsus. Nous verrons dans la suite comment ceci se traduit au niveau de l'installation utilisée.

Dans une certaine mesure, compte tenu aussi des indications précédentes, relatives à la durée du processus, il est préférable pour obtenir des microsphères plus petites et de faible masse volumique de partir de verres dont la teneur en soufre n'est pas trop faible. A titre indicatif, la teneur pondérale en soufre du verre des particules traitées peut se situer aux environs de 0,5% ou même un peu plus. Pour faciliter la transformation des particules en microsphères, il peut aussi être avantageux d'incorporer dans la composition une quantité de bore relativement plus importante que dans les verres les plus usuels. On peut ainsi choisir des compositions contenant jusqu'à environ 15% en poids d'oxyde de bore. Il faut souligner qu'une part très importante de cet oxyde est éliminée au cours du traitement d'expansion.

Par ailleurs, les verres utilisés sont relativement riches en alcalins et notamment en sodium, mais cet élément aux temperatures choisies est relativement volatile. La teneur en sodium des microsphères finales est donc beaucoup plus restreinte que celle des particules initiales. Ceci constitue un avantage de la technique selon l'invention, laquelle permet de travailler à des températures supérieures à celles des techniques antérieures. L'élimination d'une part importante du sodium en effet diminue la sensibilité des microsphères à l'humidité et améliore en conséquence les propriétés, mécaniques.

Dans les conditions énoncées qui seront précisées dans les exemples, il est possible, grâce à l'invention, d'obtenir des microsphères à la fois très petites et de faible masse volumique, notamment des microsphères dont la moyenne de distribution granulométrique soit au plus égale à 20 micromètres ou même inférieure à 10 micromètres pour une masse volumique réelle inférieure à 0,5 g/cm³.

Les exemples suivants permettront de décrire l'invention de façon plus détaillée, en faisant référence aux planches de dessins annexées dans lesquelles:

— la figure 1 représente, en coupe, la partie d'une installation selon l'invention dans laquelle s'effectue l'expansion des particules,

— la figure 2 représente une variante de la figure 1,

— la figure 3 est le schéma d'ensemble d'une installation telle que décrite dans la demande précitée.

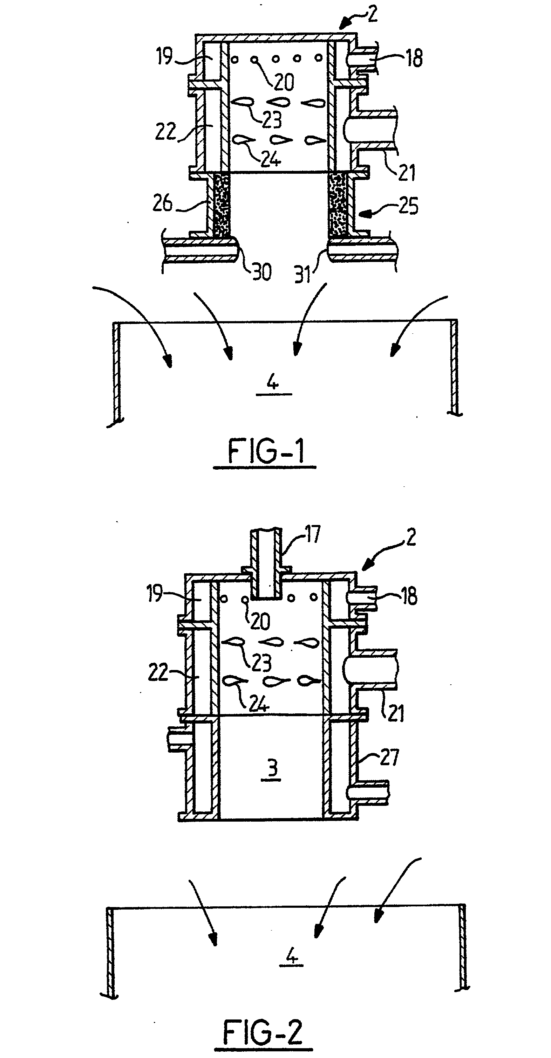

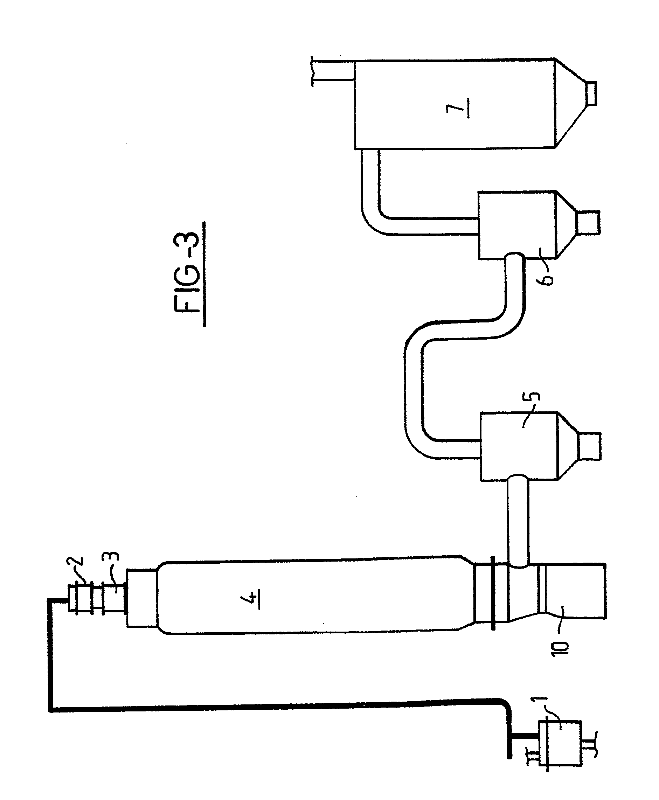

Le dispositif de production des microsphères, présenté à la figure 3, comprend les éléments suivants : un dispositif 1 pour la mise en suspension des particules dans un courant gazeux et leur transport jusqu'à la chambre de combustion d'un brûleur 2, le brûleur lui-même, une chambre 3 dans laquelle la combustion se poursuit, une enceinte de trempe 4. A cette partie de l'installation, dans laquelle s'effectue le traitement conduisant à l'expansion des microsphères, succède une série d'éléments dont le rôle est de séparer les sphères formées des gaz qui les entrainent d'une part et, d'autre part des poussières ou particules non expansées, ou encore d'agrégats de particules collées les unes aux autres. Sur la figure 1, l'ensemble des éléments de récupération des microsphères comprend un présélecteur 10, deux cyclones 5 et 6 et un filtre à manches 7.

L'alimentation en particules devant s'opérer de façon régulière et continue dans un milieu réactionnel gazeux, un mode préféré consiste à entrainer les particules par un courant gazeux.

La mise en suspension dans un courant gazeux s'effectue de façon connue, par exemple à partir d'un lit fluidisé de particules.

Les particules de verre sont introduites dans la flamme du brûleur dans des conditions qui peuvent être celles décrites dans la demande précitée ou dans des conditions légèrement modifiées. A ces deux modes correspondent les deux types d'installations représentées aux figures 1 et 2.

Dans le configuration de la figure 2, le courant gazeux portant les particules est introduit axialement par la canalisation 17 dans le brûleur 2. L'alimentation en gaz combustible s'effectue par les orifices 20 communiquant avec la chambre annulaire 19. La chambre 19 est elle-même alimentée par la canalisation 18. L'air est amené par la conduite 21 dans une chambre annulaire 22 et passe dans la zone de combustion par deux séries d'orifices 23 et 24. Ces derniers sont orientés de façon à communiquer à l'air introduit des mouvements de rotation de sens inverses. Le brûleur est prolongé par une chambre de combustion 3, délimitée par une double paroi métallique 27, dans laquelle circule un liquide de refroidissement. Par rapport à l'ensemble dans la demande FR-A-2 566 384, la chambre de combustion 3 est plus courte ceci pour tenir compte de la cinétique d'expansion des particules très petites. On réduit de cette façon le séjour des particules à température élevée. Immédiatement après la chambre de combustion, les particules et les gaz de combustion sont dirigés vers l'enceinte cylindrique 4 largement ouverte sur l'atmosphère environnante. Le passage de la chambre de combustion 3 à l'enceinte 4 s'accompagne d'un apport d'air ambiant très important qui permet une chute de température très brutale. Le mélange air-gaz de combustion est ramené en une fraction de seconde de la température de la flamme à une température inférieure à celle de ramollissement du verre. Les particules expansées se trouvent alors figées.

Par rapport aux caractéristiques énoncées dans la demande antérieure, la chambre de combustion est plus courte de manière à réduire le temps de séjour des particules aux températures les plus élevées. La longueur de la chambre et, par suite, ce temps de séjour peuvent par exemple être limités à moins de la moitié de ce qu'ils étaient dans la configuration antérieure.

La disposition de la figure 2 est bien adaptée pour traiter des particules de diamètres de l'ordre d'une dizaine de micromètres ou moins. Il est apparu aux inventeurs que le temps de traitement pouvait être encore écourté pour les particules les plus petites de l'ordre de 1 à 10 micromètres. Pour celà une configuration du type de celle représentée à la figure 1 peut être utilisée. Dans cette configuration, la chambre de combustion qui prolonge le brûleur est délimitée par un élément réfractaire 25 chemisé d'une paroi métallique 26. L'introduction des particules au moyen du gaz vecteur s'effectue par l'intermédiaire d'un ou plusiers orifices 30, 31 constitués par les extrémités des canalisations conduisant les particules. Ces orifices sont situés immédiatement sous la chambre de combustion et sont orientés de façon à diriger les particules vers le coeur du flux de gaz de combustion. Sur la figure 2, sont représentés deux orifices symétriques. Il est possible d'avoir un seul orifice ou, au contraire, plus de deux.

Il est remarquable, comme l'ont constaté les inventeurs, de parvenir à une expansion satisfaisante alors que les particules ne sont mises en contact avec les gaz de combustion qu'au moment même où ceux-ci vont être mélangés à l'air ambiant. Ceci montre à l'evidence la rapidité du phénomène qui conduit des particules aux microsphères, d'autant que les rendements de transformation pour les particules les plus petites ne sont pas inférieurs à ceux que l'on observe avec un traitement plus prolongé et même peuvent être améliorés.

Un autre avantage de la disposition de la figure 1 est d'éviter tout contact des particules avec les parois à un moment où elles sont susceptibles d'adhérer à celles-ci. Tout le processus d'expansion et de refroidissement s'effectue dans un espace non confiné. Lorsqu'elles pénètrent dans l'enceinte 4, les microsphères sont suffisamment refroidies pour ne pas se fixer sur les parois.

C'est également l'introduction des particules sous la chambre de combustion qui permet de faire l'économie du refroidissement des parois de cette chambre, et le remplacement de double paroi à circulation d'eau par une paroi réfractaire. Par ailleurs, l'utilisation de la paroi réfractaire permet de maintenir les gaz circulant dans la chambre de combustion aux températures les plus hautes.

Lorsque l'on traite des particules très petites, il est aussi nécessaire de mettre en oeuvre des moyens de récupération particulièrement adaptés. On utilise notamment des cyclones dont les caractéristiques se prêtent à la séparation d'éléments très ténus. Ce sont par exemple des cyclones dont la partie conique est relativement allongée par rapport à la partie cylindrique pour favoriser la sédimentation des particules.

Nous allons voir maintenant quelques exemples de mise en oeuvre de l'invention.

Dans une première série d'essais, le verre utilisé présentait la composition pondérale suivante:

| | |
|---|---|
| SiO$_2$ | 68% |
| Al$_2$O$_3$ | 0,07% |
| CaO | 6,8% |
| MgO | 0,4% |
| Na$_2$O | 13,85% |
| B$_2$O$_3$ | 5,9% |
| SO$_3$ | 0,77% |
| ZnO | 0,95% |
| P$_2$O$_5$ | 2,5% |

Différentes fractions granulométriques ont été préparées à partir de ce verre.

Les morceaux de verre sont introduits dans une broyeur à boulets avec un agent constitué par un mélange d'alcanolamines, notamment de mono et tri éthanolamine (commercialisé sous le nom de CLOTER C.823 par la Société SODECIM), à raison de 1 cm$^3$ par kilogramme de verre.

Le produit est broyé jusqu'à obtention de la granulométrie souhaitée. Eventuellement le broyat peut être trié par classe granulométrique par des moyens traditionnels. La poudre formée en effet "coule" bien et ne forme pas d'agglomérats. On peut procéder notamment à un tri dans un sélecteur dynamique.

Les particules ainsi formées sont traitées de la façon décrite dans notre précédente demande FR-A-2 566 384. La poudre mise en suspension dans un courant d'air comprimé est conduite dans un réacteur constitué par un brûleur à gaz, du type représenté à la figure 2, dans la flamme duquel les particules passent très rapidement. Les conditions dans le brûleur sont : une température élevée (supérieure à la température de fusion du verre) et une atmosphère légèrement réductrice. Immédiatement après leur passage dans la flamme les microsphères formées sont figées par un brusque refroidissement obtenu par une introduction massive d'air à température ambiante. Les microsphères produites sont récupérées et séparées des particules non expansées par des moyens traditionnels de séparation tels que des cyclones ou flottation.

Pour plus de détails on se reportera au texte précité.

Les fractions granulométriques séparées correspondent aux dimensions en micromètres de particules suivantes :
a) 11-35
b) 13,5-30
c) 6,3-15,5
d) moins de 7

L'intervalle défini entre les deux valeurs extrêmes recouvre une proportion pondérale de 80 % des particules. Autrement dit, pour chaque classe 10 % au plus des particules sont plus fines que le plus petite des dimensions et 10 % plus grandes que la limite supérieure indiquée.

Le tableau ci-dessous récapitule les conditions de traitement dans chaque cas et les résultats relatifs aux microsphères produites.

| Particules dimensions | 11–35 | 13,5–30 | 6,5–15,5 | moins 7 |
|---|---|---|---|---|
| Alimentation kg/h | 6,8 | 5,5 | 5,5 | 4,5 |
| Débit gaz m$^3$/h | 12,8 | 11,5 | 14,5 | |
| Débit air m$^3$/h | 130 | 108 | 109 | |
| Température de flamme | 1580 | 1580 | 1590 | 1580 |
| Taux de microsphères flottantes | 63% | 64% | 68,5% | 65% |
| Dimensions des microsphères | 30–80 | 32–75 | 17–42 | 8–35 |
| Masse volumique réelle des microsphères g/cm$^3$ | 0,24 | 0,20 | 0,27 | 0,4 |

Les indications relatives aux microsphères ne concernent que celles ayant été effectivement expansées. La proportion de particules non expansées reste relativement faible. Ces particules non expansées et qui ne "flottent" pas à la surface de l'eau, peuvent être séparées par une technique de flottation. Cette séparation pour un certain nombre d'applications n'est pas nécessaire compte tenu de la faible proportion des sphères non expansées. C'est notamment le cas pour l'application en tant que charge pour les plastiques moulés.

Les résultats figurant dans ce tableau montrent que en opérant avec les particules même de dimensions extrêmement faibles, et dans des conditions pratiquement identiques à celles mises en oeuvre pour des particules plus grosses, il est possible grâce à l'invention de produire industriellement de façon acceptable, notamment en ce qui concerne les débits et les rendements, des microsphères de diamètre très faible (inférieur à 50 micromètres) et ayant une masse volumique réelle relativement élevée (0,4 g/cm3).

On notera que le rendement est exprimé par rapport à la masse de particules traitées et qu'il concerne les microsphères flottantes uniquement à l'exclusion des particules non expansées, la séparation étant effectuée par flottation.

Il est remarquable que l'on parvienne dans la technique décrite à traiter un débit aussi élevé que 4,5 kg/h de verre avec des particules dont les plus grosses ne dépassent pas 7 micromètres. On aurait pu craindre en effet que pour des particules aussi fines, on éteigne la flamme. Le débit dans le cas des particules les plus petites est légèrement réduit, mais reste d'un ordre de grandeur comparable avec celui des particules des tranches supérieures.

Les dimensions atteintes en particulier avec les deux fractions granulométriques les plus petites permettent d'atteindre des dimensions de microsphères compatibles avec l'utilisation de celles-ci comme charge dans les techniques de moulage des polymères.

Par ailleurs pour la fraction d), on s'est efforcé dans l'exemple rapporté d'obtenir des microsphères à forte masse volumique. Si l'on souhaite une masse volumique plus faible, il convient par exemple de réduire le débit d'alimentation en particules. Bien entendu, la diminution de la masse volumique des microsphères s'accompagne d'un accroissement correspondant de leurs dimensions. Si l'on veut néanmoins maintenir les très faibles dimensions obtenues en d), il convient alors de partir d'une fraction de particules de dimensions encore plus petites limitées par exemple à 5 micromètres. Les essais entrepris dans ces conditions ont montré la faisabilité de l'opération même si les rendements sont un peu réduits.

Les résultats précédents ont été confirmés dans un nombre important d'essais réalisés sur un dispositif comprenant une chambre de combustion du type représenté à la figure 1. Ces essais ont été concentrés particulièrement sur les particules les plus petites. Les résultats sont présentés de la même manière que dans le tableau précédent.

Dans ce tableau, les dimensions des particules et des microsphères obtenues sont définies, d'une part, par les limites précédentes dans lesquelles on trouve 80 % de l'échantillon et par la dimension moyenne $D_{50}$ de part et d'autre de laquelle se situent 50 % de cet échantillon.

| Particules dimensions | 2,8–11 | 2,6–12 | 2,6–12 | 2,6–12 | 2,6–12 |
|---|---|---|---|---|---|
| Particule dim. $D_{50}$ | 6,4 | 6,5 | 6,5 | 6,5 | 6,5 |
| Alimentation kg/h | 6,4 | 6 | 6,75 | 6 | 6 |
| Débit gaz m³/h | 14,4 | 15 | 13,8 | 15 | 13 |
| Débit air m³/h | 120 | 88 | 150 | 120 | 125 |
| Température de flamme | 1600 | 1560 | 1450 | 1580 | 1580 |
| Taux de microsphères flottantes | 80% | | | | 75% |
| Dimensions des microsphères | 4,2–16,9 | 4,1–25,6 | 4–27 | 4,6–24,7 | 6,5–29 |
| $D_{50}$ | 9,5 | 12,8 | 13,4 | 13 | 16 |
| Masse volumique réelle des microsphères g/cm³ | 0,45 | 0,56 | 0,54 | 0,59 | 0,48 |

Ces résultats font ressortir la possibilité de travailler avec une alimentation relativement importante (environ 6 kg/h) en dépit de la petitesse des particules. Ils montrent aussi un rendement très satisfaisant. Ils montrent encore qu'il est possible de traiter les plus petites particules à des températures moins élevées.

D'autres essais ont été conduits pour préparer des microsphères encore plus petites et présentant une masse volumique plus faible. Ces essais sont réalisés avec un verre plus riche en soufre et en oxyde de bore. Sa composition est la suivante :

| | |
|---|---|
| SiO$_2$ | 63,30% |
| CaO | 6,8% |
| MgO | 0,2% |
| Na$_2$O | 14% |
| B$_2$O$_3$ | 11% |
| SO$_3$ | 1,2% |
| ZnO | 1% |
| P$_2$O$_5$ | 2,5% |

Il convient de rappeler qu'il s'agit de la composition avant traitement thermique. La composition des microsphères est sensiblement différente en ce qui concerne les éléments les plus volatiles, notamment en soufre, bore et sodium. A titre indicatif, le taux de bore final se trouve à environ 2,3 %

Des résultats d'essais réalisés avec ce verre sont donnés dans le tableau suivant :

| | | | |
|---|---|---|---|
| Particules dimensions | 2,4–8 | 2,6–10,8 | 1,8–6,1 |
| Particules dim. D$_{50}$ | 4 | 5,9 | 3,6 |
| Alimentation kg/h | 4,5 | 4,5 | 7,5 |
| Débit gaz m$^3$/h | 15 | 14,8 | 15 |
| Débit air m$^3$/h | 111 | 120 | 128 |
| Température de flamme | 1600 | 1600 | 1600 |
| Taux de microsphères flottantes | | | 80% |
| Dimensions des microsphères | 4,1–14,5 | 6,6–28,5 | 3,8–18 |
| D$_{50}$ | 8,8 | 16 | 8,5 |
| Masse volumique réelle des microsphères g/cm$^3$ | 0,62 | 0,30 | 0,5 |

Les résultats précédents montrent l'aptitude de la technique pour traiter des fractions granulométriques descendant jusqu'en dessous de 2 micromètres avec un débit relativement important et des rendements satisfaisants. On atteint également des dimensions de microsphères faibles (deuxième colonne, la moyenne se situe à environ 16 micromètres) avec une très faible masse volumique. Des dimensions plus petites à partir de fractions granulométriques de même nature peuvent être obtenues (colonne 3, moyenne 8,5 micromètres) avec une expansion plus légère qui se traduit par une masse volumique légèrement plus forte.

L'obtention de microsphères plus petites encore est obtenue en partant d'une granulométrie plus petite ce que seule permet l'utilisation des agents de fluidification décrits plus haut.

D'autres agents de fluidification ont été essayés avec succès, notamment les produits commercialisés par la Société SODECIM sous les nom CLOTER B, CLOTER A et CLOTER F 992.

Inversement, il est apparu à l'expérience que certains agents de fluidification de matériaux pulvérulents étaient sans effet dans les techniques selon l'invention. C'est en particulier le cas des poudres à base de silice commercialisées sous le nom d'Aérosil A 380. L'utilisation de ces produits même en proportions sensiblement plus élevées que celles indiquées précédemment (de l'ordre de 1 % en poids) n'ont pas permis le traitement des fines particules de verre. Celles-ci s'agglomèrent comme en l'absence de ces agents.

De façon générale pour déterminer si un agent de fluidification connu est utilisable ou non selon l'invention, on aura recours à des tests préalables très simples. L'agent en question est mélangé aux particules à traiter dans une proportion de 0,1 %. Le mélange obtenu est placé dans un récipient dont la partie inférieure est de forme conique, les parois du cône étant inclinées à 45°. Une ouverture au sommet du cône permet l'écoulement de la poudre losque celle-ci ne s'agglomère pas. Ce test permet aussi de comparer l'efficacité des agents entre eux selon la vitesse d'écoulement de la poudre.

## Revendications

1. Procédé de formation de microsphères creuses à partir de particules de verre dont les dimensions sont inférieures à 50 micromètres par mise en suspension de ces particules dans un courant gazeux, passage desdites particules dans un brûleur de récupération des microsphères formées, caractérisé en ce qu'un agent de fluidification est mélangé aux particules du verre, l'agent de fluidification étant un composé organique comportant une partie polaire présentant une affinité pour le verre et une partie non polaire.

2. Procédé selon la revendication 1, caractérisé en ce que la partie polaire comporte des groupements amines et/ou hydroxyles.

3. Procédé selon la revendication 2 dans lequel l'agent de fluidification est du type polyalcanolamine ou monopropyléneglycol.

4. Procédé selon l'une des revendications précédentes, dans lequel l'agent de fluidification est mélangé aux particules de verre en proportions ne dépassant pas 0,5% en poids.

5. Procédé selon l'une des revendications précédentes, dans lequel les particules de verre traitées ont pour au moins 90% en poids une granulométrie inférieure à 20 micromètres.

6. Procédé selon la revendication 5 dans lequel les particules ont pour au moins 90% en poids une granulométrie inférieure à 10 micromètres.

7. Procédé selon l'une des revendications précédentes, dans lequel l'agent de fluidification est introduit au moment de la formation des particules de verre par broyage.

8. Microsphères obtenues par le procédé selon l'une des revendications précédentes, et dont la moyenne de distribution correspond à des dimensions qui ne sont pas supérieures à 20 micromètres pour une masse volumique réelle inférieure à 0,5 g/cm³.

9. Microsphères obtenues par le procédé, selon l'une des revendications 1 à 7 et dont la moyenne de distribution correspond à des dimensions qui ne sont pas supérieures à 10 micromètres pour une masse volumique réelle inférieure à 0,5 g/cm³.

10. Installation pour la production de microsphères creuses à partir de particules de verre, comprenant des moyens (1) pour la mise en suspension des particules dans un courant gazeux lequel est dirigé vers une chambre de combustion (3) d'un brûleur (2), une chambre (4) de trempe faisant suite immédiatement à la chambre de combustion, laissant pénétrer, abondamment l'air ambiant sous l'effet d'une aspiration entretenue depuis l'extrémité des moyens de séparation solides/gaz et des moyens de séparation (10, 5, 6, 7) pour recueillir les particules transportées par les gaz avant le rejet de ces derniers, caractérisée en ce que l'introduction des particules dans le brûleur est située de façon qu'elles pénètrent dans les gaz de combustion.

11. Installation selon la revendication 10 dans laquelle la chambre de combustion (3) est délimitée par une paroi réfractaire (25) et l'introduction des particules avec le gaz vecteur est effectuée à la sortie de la chambre de combustion.

12. Installation selon la revendication 11 dans laquelle l'alimentation en particules est faite à partir d'un ou plusieurs orifices (30, 31) orientés vers le cœur du flux de gaz de combustion.

13. Installation selon l'une des revendications 11 ou 12 dans laquelle le flux gazeux de combustion portant les particules circule jusqu'à la chambre de trempe (4) dans un espace non confiné ouvert sur l'atmosphère environnante.

14. Installation selon la revendication 11 dans laquelle les moyens de séparation solides/gaz (5, 6) comportent au moins un cyclone dont la partie conique est au moins aussi longue que la partie cylindrique.

**Claims**

1. A method of forming hollow microspheres from particles of glass having dimensions of less than 50 microns by bringing said particles into suspension in a gaseous current, passing said particles through a burner for recovery of the microspheres formed, characterized in that a fluidifying agent is mixed with the particles of the glass, the fluidifying agent being an organic compound comprising a polar part having an affinity for the glass and a non-polar part.

2. A method according to Claim 1, characterized in that the polar part comprises amine and/or hydroxyl groups.

3. A method according to Claim 2, in which the fluidifying agent is of the polyalcanol amine or monopropylene glycol type.

4. A method according to one of the preceding Claims, in which the fluidifying agent is mixed with the particles of glass in proportions not exceeding 0.5% by weight.

5. A method according to one of the preceding Claims, in which at least 90% by weight of the particles of glass treated have a granulometry less than 20 microns.

6. method according to Claim 5, in which at least 90% by weight of the particles have a granulometry less than 10 microns.

7. A method according to one of the preceding Claims, in which the fluidifying agent is introduced at the time of formation of the particles of glass by crushing.

8. Microspheres produced by the method according to one of the preceding Claims, the distribution mean of which corresponds to dimensions which are not greater than 20 microns for a real bulk density less than 0.5 g/cm³.

9. Microspheres produced by the method according to one of Claims 1 to 7, the mean distribution of which corresponds to dimensions which are not greater than 10 microns for a real bulk density less than 0.5 g/cm³.

10. Apparatus for the production of hollow microspheres from particles of glass, comprising means (1) for bringing the particles into suspension in a gaseous current which is directed towards a combustion chamber (3) of a burner (2), a quenching chamber (4) following immediately after the combustion chamber allowing the ambient air to enter abundantly under the effect of a suction maintained from the end of the solids/gases separation means and separation means (10, 5, 6, 7) for collecting the particles conveyed by the gases before the gases are rejected, characterized in that the introduction of the particles into the burner is situated in such a manner that they enter the combustion gases.

11. Apparatus according to Claim 10, in which the combustion chamber (3) is bounded by a refractory wall (25) and the introduction of the particles with the carrier gas is effected at the outlet from the combustion chamber.

12. Apparatus according to Claim 11, in which the feed of particles is carried out from one or more orifices (30, 31) orientated towards the core of the combustion gas flow.

13. Apparatus according to one of Claims 11 or 12, in which the combustion gas flow carrying the particles circulates as far as the quenching chamber (4) in an unconfined space open to the surrounding atmosphere.

14. Apparatus according to Claim 11, in which the solids/gases separation means (5, 6) comprise at least one cyclone, the conical part of which is at least as long as the cylindrical part.

**Patentansprüche**

1. Verfahren zur Herstellung von Mikrohohlkugeln anhand von Glasteilchen, deren Abmessungen unter 50 µm liegen, indem diese Teilchen einer Suspension in einem Gasstrom unterworfen werden und einen Regenerativbrenner für geformte Mikrokugeln durchlaufen, dadurch gekennzeichnet, daß ein Fluidisierungsmittel unter die Glasteilchen gemischt wird, wobei dieses Fluidisierungsmittel eine organische Verbindung ist, die einen eine Affinität zu Glas aufweisenden polaren Anteil und einen nicht polaren Anteil aufweist.

2. Verfahren nach Anspruch 1, dadurch gekennzeichnet, daß der polare Anteil Amingruppierungen und/oder Hydroxylgruppen aufweist.

3. Verfahren nach Anspruch 2, dadurch gekennzeichnet, daß das Fluidisierungsmittel von der Art eines Polyalcanolamins oder Monopropylenglykols ist.

4. Verfahren nach einem der vorhergehenden Ansprüche, dadurch gekennzeichnet, daß das Fluidisierungsmittel mit Glasteilen in Proportionen gemischt wird, die 0,5 Gewichts-% nicht überschreiten.

5. Verfahren nach einem der vorhergehenden Ansprüche, dadurch gekennzeichnet, daß die behandelten Glasteilchen zu wenigstens 90 Gewichts-% eine Korngröße von weniger als 20 µm aufweisen.

6. Verfahren nach Anspruch 5, dadurch gekennzeichnet, daß die Teilchen zu wenigstens 90 Gewichts-% eine Korngröße von weniger als 10 µm aufweisten.

7. Verfahren nach einem der vorhergehenden Ansprüche, dadurch gekennzeichnet, daß das Fluidisierungsmittel im Augenblick der Glasteilchenbildung durch Zerkleinerung zugeführt wird.

8. Mikrokugeln, hergestellt durch das Verfahren nach einem der vorhergehenden Ansprüche, bei denen das Mittel der Verteilung Abmessungen entspricht, welche 20 µm bei einer tatsächlichen Dichte von weniger als 0,5 g/cm$^3$ nicht übersteigen.

9. Mikrokugeln, hergestellt durch das Verfahren nach einem der Ansprüche 1 bis 7, bei denen das Mittel der Verteilung Abmessungen entspricht, welche 10 µm bei einer tatsächlichen Dichte von weniger als 0,5 g/cm$^3$ nicht übersteigen.

10. Anlage zur Herstellung von Mikrohohlkugeln aus Glasteilchen mit einer Vorrichtung (1), um diese Teilchen einer Suspension in einem Gasstrom zu unterwerfen, welcher in Richtung einer Brennkammer (3) eines Brenners (2) ausgerichtet ist, mit einer Abschreckkammer (4), die sich unmittelbar an die Brennkammer anschließt und eine ausreichende Menge Umgebungsluft unter der Wirkung einer Absaugung eindringen läßt, die vom Ende der Trennvorrichtung für feste Stoffe und Gase aufrechterhalten ist, und mit einer Trennvorrichtung (10, 5, 6, 7), um die Teilchen, die von den Gasen mitgenommen werden, wiederzugewinnen, bevor die letzteren ausgestoßen werden, dadurch gekennzeichnet, daß der Teilcheneinlaß in dem Brenner so angeordnet ist, daß die Teilchen in die Brenngase eintreten.

11. Anlage nach Anspruch 10, dadurch gekennzeichnet, daß die Brennkammer (3) durch eine feuerfeste Wand (25) begrenzt ist und die Einführung der Teilchen in das Traggas am Ausgang der Brennkammer stattfindet.

12. Anlage nach Anspruch 11, dadurch gekennzeichnet, daß die Beschickung mit den Teilchen über eine oder mehrere auf die Mitte des Brenngasstroms gerichtete Öffnungen (30, 31) erfolgt.

13. Anlage nach einem der Ansprüche 11 oder 12, dadurch gekennzeichnet, daß der die Teilchen tragende Brenngasstrom bis zur Abschreckkammer (4) in einem nicht abgeschlossenen, zur Umgebungsatmosphäre offenen Raum zirkuliert.

14. Anlage nach Anspruch 11, dadurch gekennzeichnet, daß die Vorrichtungen zur Feststoff/Gas-Trennung (5, 6) wenigstens einen Zyklon aufweisen, dessen konischer Teil wenigstens so lang ist wie der zylindrische Teil.

FIG-1

FIG-2

FIG -3

EP 0 236 228 B1